# FASCICULE DE BREVET EUROPEEN

(11) **EP 0 402 294 B1**
(45) Date de publication et mention de la délivrance du brevet: **21.04.1993**
(21) Numéro de dépôt: 90470032.5
(22) Date de dépôt: 01.06.1990
(51) Int. Cl.: B05B 15/12, B05B 3/00, B05D 1/02

(54) **Procédé de recyclage de produits issus de la dénaturation des peintures et produit obtenu**
Verfahren zur Rückführung von bei der Entklebung von Lack, entstandenen Abfällen und Endprodukt
Recycling process of paint removal waste and final product

(30) Priorité: 08.06.1989 FR 8907761
(43) Date de publication de la demande: 12.12.1990
(73) Titulaire: AIR INDUSTRIE SYSTEMES, F-92400 Courbevoie (FR)
(72) Inventeur: Wenger Benoît, F-45730 Saint Benoît sur Loire (FR)
(74) Mandataire: Weinmiller, Jürgen, Dipl.-Ing.

(56) Documents cités:
- FR-A- 2 607 141
- PATENT ABSTRACTS OF JAPAN, vol. 10, no. 314 (C-380), 24 octobre 1986; & JP-A-61 123 639 (TOYOTA MOTOR CORP.) 11-06-1986
- PATENT ABSTRACTS OF JAPAN, vol. 4, no. 34 (C-003), 22 mars 1980; & JP-A-55 008 872 (KANSAI PAINT CO., LTD) 22-01-1980
- PATENT ABSTRACTS OF JAPAN, vol. 7, no. 7 (C-162), 2 février 1983; & JP-A-58 017 890 (TORAY K.K.) 02-02-1983

## Description

La présente invention est relative à un procédé de recyclage de produits issus de la dénaturation des peintures.

On connait, par le document FR-A-2 607 141 déposé au nom de la Demanderesse, un procédé de dénaturation des peintures captées dans des cabines de peinture, par exemple pour véhicules automobiles, comportant un laveur d'air dans lequel l'air chargé de gouttelettes de peinture est mis en contact avec un liquide de lavage auquel on ajoute un additif issu du broyage d'un polyuréthane expansé.

Grâce à ce procédé, on réalise un résidu, flottant à la surface d'un bac de récupération, constitué de la peinture que l'on veut éliminer et de la poudre de polyuréthane.

On obtient ainsi une boue qui, avant le procédé selon la présente invention, devait être soit stockée soit détruite puisqu'il n'existait pas de moyen simple et efficace pour recycler ce résidu.

La présente invention a donc pour but de résoudre ce problème en proposant un procédé de recyclage de cette boue en un produit nouveau réutilisable conformément à la revendication 1.

Les caractéristiques et avantages ressortiront à la suite de la description qui va suivre.

Selon le document FR-A-2 607 141, le dispositif de lavage d'une cabine de peinture est alimentée avec un liquide contenant de la poudre de polyuréthane.

De la sorte, les gouttelettes de peinture qui ne sont pas déposées sur la pièce à peindre sont évacuées par le liquide de lavage où elles s'agglomèrent avec les grains de poudre de polyuréthane expansé.

La boue ainsi constituée flotte au dessus du liquide de lavage et est récupérée par exemple par raclage.

Il est ainsi obtenu une boue constituée d'eau de lavage, de résidus de peinture et de polyuréthane, le rapport massique entre le polyuréthane et les résidus de peinture étant supérieur ou égal à 0,3.

Dans le procédé selon la présente invention, les boues sont, dans une première étape, filtrées et pressées puis, dans une deuxième phase, étuvées de manière à supprimer toute trace de vapeur d'eau ce qui est avantageux comme on le verra plus loin.

Il est ainsi obtenu un résidu solide d'où ont disparu, d'une part, l'eau, et, d'autre part, les solvants présents dans la peinture.

L'extrait sec obtenu est donc désodorisé.

Dans une troisième phase, les boues asséchées sont mises en contact avec un mélange réactif liquide constitué de polyisocyanates et de polyols, ce qui permet d'obtenir,suite à l'expansion du polyuréthane réalisé à partir du mélange réactif, une mousse de polyuréthane, présentant des caractéristiques mécaniques comparables à celles d'une mousse de polyuréthane classique, dans laquelle les résidus de peinture sont répartis de manière homogène.

Pour obtenir un produit présentant des caractéristiques mécaniques encore plus homogènes et reproductibles, il est prévu, en variante, une phase de broyage du résidu solide obtenu après étuvage des boues.

Ceci permet d'obtenir une matière première de granulométrie homogène et contrôlée avant son mélange avec le mélange réactif.

Dans le procédé selon la présente invention, il est bien entendu préférable de réduire au minimum la quantité de mélange réactif liquide ajoutée par rapport à la quantité de matière sèche à traiter.

Suite aux essais qui ont été réalisés, il est apparu que l'on obtenait une mousse de polyuréthane de bonne qualité pour un rapport massique (mélange réactif ajouté)/(matière sèche à traiter) supérieur à 1 préférablement entre 2 et 4.

En effet, suite à l'étuvage des boues, la poudre de polyuréthane et les résidus de peinture qu'elles contiennent deviennent complètement inertes.

Ainsi, le rapport entre la masse de poudre de polyuréthane et la masse de résidus de peinture, dans la matière sèche obtenue après étuvage, est sans effet sur la quantité de polyuréthane liquide qu'il est nécessaire d'ajouter pour obtenir une mousse de polyuréthane de bonne qualité.

Par ailleurs, la phase d'étuvage, outre son importance pour la désodorisation des boues par l'élimination des solvants, est nécessaire pour éviter l'apparition de crevasses lors de la phase d'expansion du polyuréthane.

Il est ainsi obtenu un produit constitué par :
- de 60% à 85% de polyuréthane,
- de 15% à 40% de résidus de peinture.

Le matériau ainsi obtenu présente de bonnes propriétés d'isolation acoustique et thermique.

La présente invention permet donc d'obtenir une mousse de polyuréthane colorée issue du recyclage des boues obtenues par la dénaturation de peintures par addition de poudre de polyuréthane.

## Revendications

1. Procédé de recyclage de boues issues de la dénaturation de peintures, par addition de poudre de polyuréthane, dans des installations de cabines de peintures, caractérisé en ce que les boues obtenues sont, dans une première phase, pressées et filtrées, puis, dans une deuxième phase, étuvées pour obtenir une matière sèche désodorisée et enfin, dans une troisième phase, mélangées avec mélange réactif liquide constitué de polyisocyanates et de polyols.

2. Procédé selon la revendication 1 caractérisé en ce que le rapport massique entre la quantité de mélange réactif liquide et la matière sèche désodorisée est supérieur à 1.

3. Procédé selon la revendication 3 caractérisé en ce que le rapport massique entre la quantité de mélange réactif liquide et la matière sèche est compris entre 2 et 4.

4. Procédé selon l'une des revendications précédentes caractérisé en ce que la matière sèche produite par étuvage est broyée avant d'être additionnée au mélange réactif liquide.

## Patentansprüche

1. Verfahren zur Aufarbeitung von aus der Denaturierung von Lacken stammenden Schlämmen durch Hinzufügen von Polyurethanpulver in Lackierkabinenanlagen, dadurch gekennzeichnet, daß die erhaltenen Schlämme in einem ersten Schritt gepreßt und gefiltert und in einem zweiten Schritt wärmegetrocknet werden, um einen trockenen geruchlosen Stoff zu erhalten, und daß sie schließlich in einem dritten Schritt mit einer flüssigen reaktiven Mischung bestehend aus Polyisocyanaten und Polyolen gemischt werden.

2. Verfahren nach Anspruch 1, dadurch gekennzeichnet, daß das Masseverhältnis zwischen der Menge der flüssigen reaktiven Mischung und der des geruchlos gemachten trockenen Stoffs größer ist als 1.

3. Verfahren nach Anspruch 3, dadurch gekennzeichnet, daß das Masseverhältnis zwischen der Menge der flüssigen reaktiven Mischung und der des trockenen Stoffs zwischen 2 und 4 liegt.

4. Verfahren nach einem der vorhergehenden Ansprüche, dadurch gekennzeichnet, daß der durch Wärmetrocknen erzeugte trockene Stoff zerkleinert wird, ehe er der flüssigen reaktiven Mischung zugesetzt wird.

## Claims

1. Process of recycling sludge produced by denaturing paint by adding polyurethane powder in paint booth installations characterised in that the sludge obtained is pressed and filtered in a first stage and then baked in a second stage to obtain an odourless dry material and mixed in a third stage with a liquid reagent mixture comprising polyisocyanates and polyols.

2. Process according to claim 1 characterised in that the ratio by weight between the quantity of liquid reagent mixture and the deodorised dry material is greater than 1.

3. Process according to claim 1 characterised in that the ratio by weight between the quantity of liquid reagent mixture and the deodorised dry material is between 2 and 4.

4. Process according to any one of the preceding claims characterised in that the dry material produced by baking is ground before it is added to the liquid reagent mixture.
